(19) **Europäisches Patentamt**

**European Patent Office**

**Office européen des brevets**

(11) Veröffentlichungsnummer: **0 141 306**
**B1**

(12) **EUROPÄISCHE PATENTSCHRIFT**

(45) Veröffentlichungstag der Patentschrift:
16.09.87

(21) Anmeldenummer: **84112078.5**

(22) Anmeldetag: **09.10.84**

(51) Int. Cl.⁴: **F 16 L 23/00**

(54) **Zweiteiliges Eckwinkelstück für Verbindungsflansche von Blechkanalabschnitten.**

(30) Priorität: **09.11.83 DE 3340503**

(43) Veröffentlichungstag der Anmeldung:
**15.05.85 Patentblatt 85/20**

(45) Bekanntmachung des Hinweises auf die Patenterteilung:
**16.09.87 Patentblatt 87/38**

(84) Benannte Vertragsstaaten:
**AT CH FR GB IT LI**

(56) Entgegenhaltungen:
**AT - B - 354 679**

(73) Patentinhaber: **METU-System Meinig KG, Seitinger Strasse 186, D-7201 Rietheim-Weilheim 2 (DE)**

(72) Erfinder: **Meinig, Manfred, Goethestrasse 186, D-7201 Rietheim-Weilheim 2 (DE)**

(74) Vertreter: **Patentanwälte Dipl.-Ing. Klaus Westphal Dr. rer. nat. Bernd Mussgnug Dr. rer.nat. Otto Buchner, Waldstrasse 33, D-7730 VS-Villingen (DE)**

**Beschreibung**

Die Erfindung betrifft ein Eckwinkelstück nach dem Oberbegriff des Anspruchs 1.

Ein derartiges Eckwinkelstück ist aus dem deutschen Gebrauchsmuster 7408661 bekannt. Zweiteilige Eckwinkelstücke benötigt man hauptsächlich dann, wenn Verbindungsflansche unmittelbar an die Blechkanalwand angeformt werden und die einzelnen Kanalabschnitte aus zwei Kanalwandungen umfassenden Blechwinkelteilen oder sogar aus einem Teil hergestellt werden. In diesem Falle können einstückige Eckwinkelstücke nicht mehr in die offenen Profile der Verbindungsflansche nachträglich eingesteckt werden. Sehr vorteilhaft ist die Anwendung von zweiteiligen Eckwinkelstücken aber auch, wenn Kanalabschnitte aus Transportgründen in zerlegter Form auf eine Baustelle geliefert und dort zusammengesetzt werden. Die zugehörigen Flanschprofile sind dann ebenfalls bereits an der Kanalwand befestigt, beispielsweise durch Punktschweissung aufgepunktet. Nach dem Zusammenbau der Kanalwände müssen die Eckwinkelstücke auch in diesem Falle nachträglich in die offenen Profile der Verbindungsflansche eingesteckt werden. Grundsätzlich wäre es zwar möglich, ein einstückiges Eckwinkelstück bereits während des Zusammensetzens der Kanalwände einzustecken, doch wird dies wegen der schwierigen Handhabung möglichst vermieden.

Das aus der genannten Gebrauchsmusterschrift bekannte zweiteilige Eckwinkelstück hat einige Anwendungsnachteile. So wird das zweite Teilstück beim Einschieben von dem bereits eingeschobenen ersten Teilstück angehoben und verkantet sich im Flanschprofil. Es muss daher in die vollständig eingeschobene Stellung eingehämmert werden und weitet infolge des Anhebens durch das erste Teilstück den Profilhohlraum auf. Dadurch sitzt es nach dem vollständigen Einschieben locker im Verbindungsflansch, da dessen Profil nach dem Aufweiten nicht zusammenfedert. Ein weiterer Nachteil ist darin zu sehen, dass beide Teilstücke zwischen Anlageflächen und Schenkeln beim gegenseitigen Verschrauben der Eckwinkelstücke zweier aneinanderstossender Kanalabschnitte stark auf Biegung beansprucht werden und im Übergangsbereich zwischen Anlagefläche und Schenkel leicht abknicken. Dadurch haben sie nur eine geringe Biegestabilität, was sich bei der Abdichtung aneinanderstossender Kanalabschnitte nachteilig bemerkbar machen kann. Infolge der oben beschriebenen Schwierigkeiten beim Einschieben des zweiten Teilstücks können ausserdem nur relativ dünne Blechstärken für die Teilstücke verwendet werden. Dadurch lässt sich die Biegestabilität durch Verwendung grösserer Blechstärken nicht verbessern. Die beiden Teilstücke sitzen daher nur relativ lose aneinander und rutschen schon bei geringer Belastung aus ihrer gegenseitigen Verrastung, zumal das zweite Teilstück, wie erwähnt, im aufgeweiteten Profil nur lose sitzt.

Der Erfindung liegt die Aufgabe zugrunde, das bekannte Eckwinkelstück so zu verbessern, dass beim Einstecken in die Verbindungsflansche kein Aufweiten oder Verletzen derselben und beim Verschrauben kein Verbiegen oder Abknicken der Teilstücke eintritt.

Diese Aufgabe wird erfindungsgemäss durch die kennzeichnenden Merkmale des Anspruchs 1 gelöst.

Da das zweite Teilstück durchgehend flach ist, kann es durch die am ersten Teilstück vorgesehene Führungsnut ohne Hindernis von Hand in das offene Profil des Verbindungsflansches eingeschoben werden. Das Profil wird dadurch nicht aufgeweitet. Beide Teilstücke sind im biegekritischen Übergangsbereich zwischen Anlagefläche und Schenkel im wesentlichen nicht geschwächt, da grössere Blechstärken verwendet werden können, ohne dass eine Behinderung beim Einschieben eintritt. Die gegenseitige Verrasterung der Teilstücke hält auch bei starker Eckknickbelastung des Blechkanals, da die Anlageflächen der Teilstücke glatt aneinanderliegen und nicht schon beim Einschieben und anschliessenden Festziehen der Schrauben auf Biegung beansprucht werden. Die Führung des zweiten Teilstücks in der Führungsnut des ersten Teilstücks gewährleistet ausserdem einen festen Sitz der Teile aneinander, die gegenseitig nicht ausweichen können.

Eine weitere Verstärkung des ersten Teilstücks im biegekritischen Bereich wird durch den Verstärkungssteg gemäss Anspruch 2 erreicht. Dieser Verstärkungssteg lässt sich gemäss den Ansprüchen 3 und 4 besonders einfach und stabil herstellen, kann aber zur Anpassung an beliebige Profilformen der Verbindungsflansche auch andere Formen annehmen.

Beim bekannten zweiteiligen Eckwinkelstück ist es ferner nachteilig, dass infolge des lockeren Sitzes der Teilstücke im Profil des Verbindungsflansches diese bei Transport und Montage leicht herausrutschen. Das zuletzt eingeschobene zweite Teilstück wurde daher meist durch eine ins Profil des Verbindungsflansches eingedrückte Nocke arretiert, welche in ein Loch am Schenkel des Teilstücks einrastet. Das Eindrücken dieser Nocken erfolgt dabei mit einer speziellen pneumatischen Handnockenpresse, was einen erheblichen Arbeitsaufwand bedeutet. Der ganze schwere Kanalabschnitt muss entsprechend gewendet werden, um alle acht Ecken mit diesem Handwerkzeug zu erreichen. Durch die vorteilhafte Ausgestaltung gemäss Anspruch 5 vermeidet man diesen arbeitsaufwendigen Vorgang, indem lediglich der vorstehende Ansatz des ersten Teilstücks in die Ausnehmung bzw. Abschrägung des zweiten Teilstücks, beispielsweise durch einen einzigen Hammerschlag, eingedrückt wird, wobei bereits ein Einbördeln des Ansatzes in einem Winkel von etwa 45° für das vollständige Blockieren des zweiten Teilstücks ausreicht. Da andererseits das zweite Teilstück in der Führungsnut des ersten Teilstücks liegt, wird letzteres festgelegt und am Herausrutschen gehindert.

Anhand der Figuren wird ein Ausführungsbeispiel der Erfindung näher erläutert. Es zeigen:

Fig. 1 Schrägansichten des ersten und zweiten Teilstücks des erfindungsgemässen Eckwinkelstücks,

Fig. 2 eine Teilschrägansicht des Endes eines Kanalabschnitts mit angepunkteten Verbindungsflanschen bei eingeschobenem ersten Teilstück des Eckwinkelstücks, wobei das zweite Teilstück sich in der Lage unmittelbar vor dem Einschieben befindet,

Fig. 3 eine der Fig. 2 entsprechenden Schrägansicht mit vollständig eingeschobenen und aneinander verrasteten beiden Teilstücken.

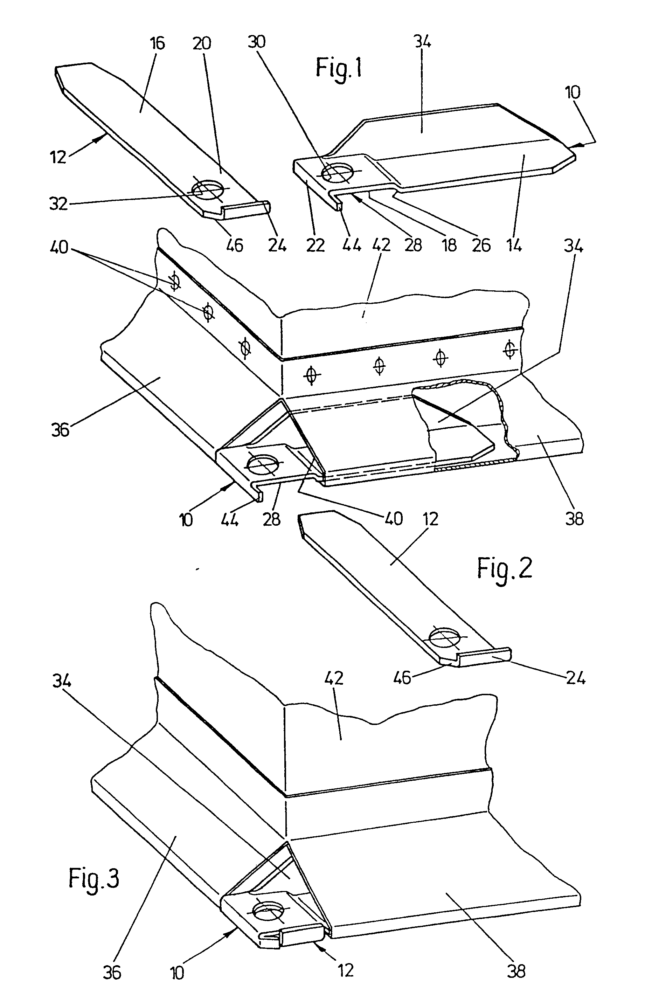

In Fig. 1 ist das erste Teilstück allgemein mit 10 und das zweite Teilstück allgemein mit 12 bezeichnet. Beide Teilstücke weisen einen als ebene Platte ausgebildeten Schenkel 14 bzw. 16 und eine damit zusammenhängende ebene Anlagefläche 18 bzw. 20 auf. Beide Anlageflächen weisen an der dem Schenkel 14 bzw. 16 gegenüberliegenden Seite einen aufgebördelten Rand 22 bzw. 24 auf. Das erste Teilstück 10 weist ferner eine Abkröpfung 26 auf, die zusammen mit der Anlagefläche 18 und dem aufgebördelten Rand 22 eine Führungsnut 28 bildet, in der das erste Teilstück 12 beim Einschieben in den zugehörigen Verbindungsflansch sicher geführt wird. Beide Anlageflächen 18 bzw. 20 weisen im zusammengesetzten Zustand gem. Fig. 3 sich überdeckende Schraubenlöcher 30 bzw. 32 auf.

Das erste Teilstück 10 trägt längs seines einen Randes einen einstückig aufgebogenen, sich im wesentlichen über die Länge des Schenkels 14 erstreckenden und einen Teil der Anlagefläche 18 übergreifenden Steg 34, der an der Innenseite des Flanschprofils zur Anlage kommt und eine sehr gute Biegesteifheit der Anlagefläche 18 bezüglich des Schenkels 14 gewährleistet.

Das erfindungsgemässe Eckwinkelstück wird gemäss den Figuren 2 und 3 in die offenen Profilenden 40 von im wesentlichen dreieckförmigen Verbindungsflanschen 36 und 38 eingesetzt, die am Ende eines Blechkanalabschnitts 42 durch Punktschweissungen 48 angepunktet sind. Gemäss Fig. 2 wird zunächst das erste Eckwinkelstück 10 derart in den Verbindungsflansch 38 eingeschoben, dass bei der dargestellten Lage der Steg 34 nach oben steht und an der inneren Profilwand anliegt. Anschliessend wird das zweite Teilstück 12 durch die Nut 28 des ersten Teilstücks 10 in den anderen Verbindungsflansch 36 soweit eingeschoben, bis der aufgebördelte Rand 24 am äusseren Rand der Anlagefläche 18 anliegt. Anschliessend wird mittels eines Hammerschlages der über den äusseren Rand der Anlagefläche 18 vorstehende Ansatz 44 des ersten Teilstücks um etwa 45° eingeschlagen, so dass er an der Anschrägung 46 des zweiten Teilstücks anliegt und dieses dadurch in seiner Lage verriegelt.

**Patentansprüche**

1. Aus zwei Teilstücken bestehendes Eckwinkelstück, dessen Schenkel in die offenen Profile von an den Enden von Blechkanalabschnitten angeformten oder befestigten Verbindungsflanschen einsteckbar sind, wobei die Teilstücke im Scheitelbereich aneinander anliegende, an einer Seite je einen aufgebördelten Rand tragende und mit sich überdeckenden Schraublöchern versehene ebene Anlageflächen aufweisen, dadurch gekennzeichnet, dass wenigstens der Schenkel (16) des zweiten Teilstücks (12) als ebene Platte ausgebildet ist, dass Schenkel (16) und Anlagefläche (20) des zweiten Teilstücks (12) eben ineinander übergehen und dass die Anlagefläche (18) des ersten Teilstücks (10) gegen den anschliessenden Schenkel (14) derart abgekröpft ist, dass die Abkröpfung (26) zusammen mit dem aufgebördelten Rand (22) und der Anlagefläche (18) des ersten Teilstücks (10) eine Führungsnut (28) zum Einschieben des zweiten Teilstücks (12) bildet.

2. Eckwinkelstück nach Anspruch 1, dadurch gekennzeichnet, dass das erste Teilstück (10) mindestens einen die Abkröpfung (26) übergreifenden Verstärkungssteg (34) trägt.

3. Eckwinkelstück nach Anspruch 2, dadurch gekennzeichnet, dass der Verstärkungssteg (34) als senkrecht zur Ebene des als ebene Platte ausgebildeten Schenkels (14) und der Anlagefläche (18) des ersten Teilstücks (10) abstehender ebener Teil ausgebildet ist.

4. Eckwinkelstück nach Anspruch 3, dadurch gekennzeichnet, dass der Verstärkungssteg (34) als längs eines durchlaufenden Randes zwischen Schenkel (14) und Anlagefläche (18) etwa senkrecht einstückig aufgebogener Teil ausgebildet ist.

5. Eckwinkelstück nach einem der vorangehenden Ansprüche, dadurch gekennzeichnet, dass der aufgebördelte Rand (22) des ersten Teilstücks einen über den Rand der Anlagefläche (18) vorstehenden Ansatz (44) aufweist, der im zusammengefügten Zustand der beiden Teilstücke (10, 12) in eine entsprechende Ausnehmung oder Abschrägung (46) des zweiten Teilstücks (12) eindrückbar ist.

**Claims**

1. Corner angle consisting of two pieces, the legs of which can be fitted into the open profiles of connecting flanges formed or fixed on the ends of plate duct sections, the pieces having flat contact surfaces which are adjacent in the vertex area, each bear a flanged edge on one side and are provided with coinciding screw holes, characterized in that at least the leg (16) of the second piece (12) is designed as a flat plate, in that leg (16) and contact surface (20) of the second piece (12) merge flatly one into the other and in that the contact surface (18) of the first piece (10) is bent off with respect to the adjoining leg (14) in such a way that the bent-off portion (26), together with the flanged edge (22) and the contact surface (18) of the first piece (10), forms a guide groove (28) for the insertion of the second piece (12).

2. Corner angle according to Claim 1, characterized in that the first piece (10) bears at least one reinforcing web (34) extending over the bent-off portion (26).

3. Corner angle according to Claim 2, characterized in that the reinforcing web (34) is designed as a flat part which is perpendicular to the plane of the leg (14) designed as a flat plate and projects from the contact surface (18) of the first piece (10).

4. Corner angle according to Claim 3, characterized in that the reinforcing web (34) is designed as a part which is bent up approximately vertically along a continuous edge between leg (14) and contact surface (18) as an integral piece.

5. Corner angle according to one of the preceding claims, characterized in that the flanged edge (22) of the first piece has an extension (44) which protrudes beyond the edge of the contact surface (18) and, in the assembled state of the two pieces (10, 12), can be pushed into a corresponding recess or bevel (46) of the second piece (12).

**Revendications**

1. Pièce de cornière d'angles en deux parties, dont les montants peuvent s'introduire dans les profils ouverts de brides de liaison formées ou bien fixées aux extrémités de sections de chéneaux en tôle, les pièces placées les unes contre les autres au voisinage du sommet, portant chacune un bord bodé sur un côté et présentant des surfaces d'appui plates pourvues de trous pour des vis, se recouvrant, caractérisée en ce qu'au moins le montant (16) de la deuxième pièce (12) est en forme de plaque plate, en ce que le montant (16) et la surface d'appui (20) de la deuxième pièce (12) se recouvrent l'une l'autre et que la surface d'appui (18) de la première pièce (10) est recourbée contre le montant (14), immédiatement à côté, de telle sorte que le recourbement (26) forme ensemble avec le bord bordé (22) et la surface d'appui de la première pièce (10) une rainure de guidage (28) pour l'introduction de la deuxième pièce (12).

2. Pièce de cornière d'angles selon la revendication 1, caractérisée en ce que la première pièce (10) porte au moins une nervure de renforcement (34) recouvrant le recourbement (26).

3. Pièce de cornière d'angles selon la revendication 2, caractérisée en ce que la nervure de renforcement (34) est formée verticalement par rapport au plan du montant (14) en forme de plaque plate et de la partie plate faisant saillie de la surface d'appui (18) de la première pièce (10).

4. Pièce de cornière d'angles selon la revendication 3, caractérisée en ce que la nervure de renforcement (34) est formée en une seule pièce pliée environ verticalement, le long d'un bord s'étendant entre montant (14) et surface d'appui (18).

5. Pièce de cornière d'angles selon l'une des revendications précédentes, caractérisée en ce que le bord (22) bordé de la première pièce présente un appendice (44) proéminent au-dessus du bord de la surface d'appui (18), qui lorsque les deux pièces (10, 12) sont jointes, peut être introduit dans un évidement ou un chanfrein (46) correspondant de la deuxième pièce (12).

Fig.1

Fig.2

Fig.3